# FASCICULE DE BREVET EUROPEEN

(11) **EP 0 729 885 B1**
(45) Date de publication et mention de la délivrance du brevet: **03.11.1999**
(21) Numéro de dépôt: 96400286.9
(22) Date de dépôt: 12.02.1996
(51) Int. Cl.: B64G 1/28, G01C 19/16

(54) **Dispositif pneumatique de verrouillage/déverrouillage d'un rotor sur un stator**
Pneumatische Vorrichtung zur Verriegelung oder Entriegelung eines Rotors an einem Stator
Pneumatic device for fastening and unfastening a rotor to a stator

(30) Priorité: 02.03.1995 FR 9502418
(43) Date de publication de la demande: 04.09.1996
(73) Titulaire: AEROSPATIALE Société Nationale Industrielle, 75781 Paris Cédex 16 (FR)
(72) Inventeur: Leconte, Sylvain, F-78390 Bois d'Arcy (FR); Bernus, Christophe, F-75018 Paris (FR); Truchot, Emmanuel, F-92700 Colombes (FR)
(74) Mandataire: Santarelli, Marc

(56) Documents cités:
- DE-A- 2 342 732
- DE-A- 2 436 006
- FR-A- 2 389 023
- FR-A- 2 549 598
- GB-A- 2 129 554
- US-A- 4 872 357

## Description

L'invention concerne le maintien aussi bien axial que radial d'un rotor par rapport à un stator, notamment vis-à-vis de vibrations. Ce rotor fait par exemple partie d'une roue de réaction ; il peut s'agir d'une roue de réaction pour véhicule spatial, auquel cas un verrouillage efficace est notamment requis pour résister aux régimes vibratoires générés lors du lancement à partir du sol.

On connaît déjà des solutions mécaniques pour assurer un tel verrouillage/déverrouillage.

Ainsi, par exemple, le document FR-2.619.176 (ou le document US-4.872.357 (AEROSPATIALE) propose un maintien temporaire du rotor grâce à un câble annulaire plaquant radialement sur le rotor des bras de blocage munis de cames. Le déverrouillage se fait par cisaillement du câble.

Ces solutions mécaniques donnent satisfaction. Toutefois, elles ont comme inconvénient d'être complexes, chères et encombrantes et, accessoirement, ne permettent guère des cycles multiples de verrouillage/déverrouillage (mais ce besoin est rare).

L'invention a pour objet de pallier les inconvénients précités et, dans le cas d'une configuration au sol, vise à rendre possible une commande à distance très simple (sous réserve de simples opérations de raccordement).

Elle propose à cet effet un dispositif pour le verrouillage et le déverrouillage d'un rotor vis à vis d'un stator, au moins parallèlement à l'axe de rotation de ce rotor, comportant :
- une bride annulaire rotorique disposée transversalement à l'axe,
- une portée annulaire statorique disposée transversalement à l'axe et disposée au moins en partie axialement en regard de la bride annulaire,
- une portée annulaire mobile, disposée transversalement à l'axe et disposée au moins en partie axialement en regard de la bride annulaire, à l'opposé de la portée annulaire statorique, cette portée annulaire mobile étant ménagée sur un anneau de poussée attelé radialement à une portion statorique et admettant un débattement axial vis-à-vis de celle-ci,
- une vessie annulaire gonflable, engagée dans cette portion statorique, axialement entre un fond statorique et l'anneau de poussée, cette vessie étant munie de moyens d'admission/évacuation de fluide pneumatique.

On appréciera que la mise en oeuvre d'un bridage continu suivant une zone annulaire assure une bonne tenue mécanique minimisant les risques de génération de vibrations. Bien entendu, le maintien est d'autant meilleur que le diamètre de la bride est grand.

L'intérêt d'utiliser une source pneumatique d'énergie de verrouillage, même dans un contexte de vide spatial, est d'offrir une grande simplicité d'utilisation.

Selon des enseignements préférés de l'invention, éventuellement combinés :
- la bride annulaire rotorique comporte deux faces transversales parallèles,
- la bride annulaire rotorique est ménagée en saillie radiale à la périphérie radialement externe du rotor,
- la portion statorique comporte une paroi cylindrique de guidage maintenant radialement cet anneau tout en le guidant axialement lors de son débattement axial,
- la paroi cylindrique s'étend jusqu'à la portée annulaire statorique en contournant radialement la bride annulaire rotorique,
- cette paroi de guidage entoure avec jeu l'anneau de poussée,
- la portion statorique comporte deux parois cylindriques radialement en regard définissant avec le fond statorique un logement annulaire dans lequel la vessie annulaire gonflable est engagée sensiblement en totalité,
- l'une de ces parois cylindriques se prolonge axialement par une paroi cylindrique de guidage de même diamètre maintenant radialement cet anneau tout en le guidant axialement lors de son débattement axial,
- cette paroi de guidage entoure avec jeu l'anneau de poussée,
- les moyens d'admission/évacuation comportent au moins un canal traversant le fond statorique,
- les moyens d'admission/évacuation comportent une pluralité de canaux débouchant dans la vessie et raccordées chacune à un distributeur,
- la vessie comporte deux faces transversales et deux tranches radialement interne et externe conformées en accordéon,
- les tranches radialement interne et externe ont chacune la forme d'un signe d'inégalité > ou <,
- les tranches radialement interne et externe ont une élasticité axiale les ramenant en une configuration rétractée.

Des objets, caractéristiques et avantages de l'invention ressortent de la description qui suit, donnée à titre d'exemple non limitatif, en regard des dessins annexés sur lesquels :
- la figure 1 est une demi-vue schématique en coupe axiale d'un ensemble stator-rotor muni d'un dispositif conforme à l'invention, en configuration de déverrouillage,
- la figure 2 est une demi-vue de cet ensemble, le dispositif étant en configuration de verrouillage,
- la figure 3 est une vue schématique du circuit pneumatique du dispositif de l'invention,
- la figure 4 est une demi-vue en coupe axiale d'un exemple de réalisation de l'ensemble rotor-stator et du dispositif dans la configuration de la figure 1, et
- la figure 5 en est une demi-vue en coupe axiale dans la configuration de la figure 2.

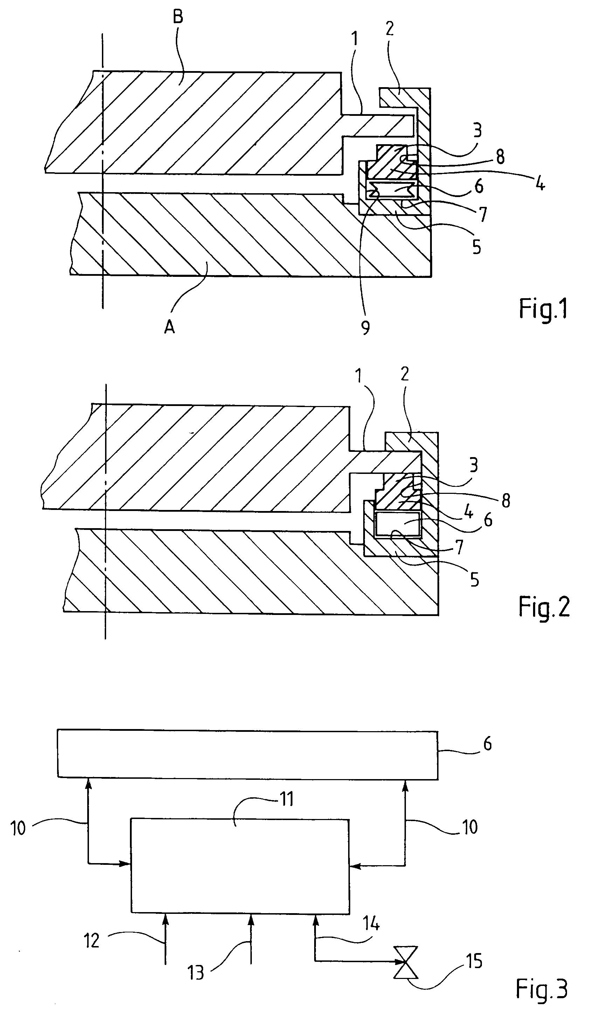

Les figures 1 et 2 représentent de façon schématique un rotor B mobile en rotation, autour d'un axe de rotation Z-Z, vis-à-vis d'un stator A. Bien entendu, ces notions peuvent être inversées : le stator est ici considéré comme étant celui des deux corps par rapport auquel on considère le mouvement relatif de l'autre corps.

Le rotor B comporte une bride annulaire rotorique 1 disposée transversalement à l'axe.

Le stator A comporte une portée annulaire fixe 2 et une portée annulaire mobile 3 disposées axialement en regard, au moins en partie, de la bride 1 en étant disposées de part et d'autre de celle-ci.

Ces portées annulaires sont disposées transversalement à l'axe.

La portée annulaire mobile 3 est ménagée sur un anneau de poussée 4 attelé radialement à une portion statorique 5 qui en assure donc un maintien radial, dans une configuration concentrique. Cet anneau de poussée 4 admet un débattement axial entre une configuration de déverrouillage où les portées annulaires sont écartées et autorisent un libre mouvement en rotation de la bride 1 et donc du rotor (ainsi qu'un débattement radial et axial), et une configuration de verrouillage dans laquelle la portée annulaire mobile est pressée axialement en direction de la portée annulaire fixe en sorte de serrer la bride et donc l'immobiliser.

Le mouvement de l'anneau de poussée entre ses configurations est assuré par une vessie annulaire gonflable 6 engagée dans la portion statorique 5, entre un fond statorique 7 et l'anneau de poussée.

Des moyens d'admission/évacuation, non représentés aux figures 1 et 2 et schématisés à la figure 3, sont prévus pour amener du fluide pneumatique dans la vessie pour un verrouillage, ou pour évacuer ce fluide pour un déverrouillage.

Dans l'exemple considéré, la bride annulaire rotorique 1 comporte deux faces transversales parallèles. Un maintien radial de la bride et donc du rotor peut en effet être assuré de manière efficace par simple frottement aux interfaces de la bride avec chacune des portées annulaires.

La bride annulaire rotorique est de préférence ménagée en saillie radiale à la périphérie du rotor pour optimiser le maintien pour un encombrement donné du rotor. En variante non représentée, la bride peut néanmoins être ménagée en-dessous ou au-dessus du rotor, en fonction des contraintes d'implantation liées à l'application particulière.

La portion statorique 5 comporte de préférence une paroi cylindrique de guidage 8 qui maintient radialement l'anneau de poussée 4 tout en le guidant axialement lors de son débattement entre les configurations de verrouillage et de déverrouillage.

Cette paroi de guidage s'étend de préférence jusqu'à la portée annulaire statorique en contournant radialement la bride.

Cette paroi de guidage 8 entoure ici l'anneau de poussée (avec un jeu suffisant pour un débattement axial aisé). Toutefois, en variante non représentée, la paroi de guidage peut être disposée à l'intérieur de l'anneau, soit en combinaison avec une bride qui serait en saillie radiale vers l'axe à partir d'une partie rotorique périphérique, soit en combinaison avec une portée annulaire fixe qui ne serait pas directement liée à la portion statorique.

De manière préférée, la portion statorique comporte deux parois cylindriques radialement en regard, définissant avec le fond statorique 7 un logement annulaire dans lequel la vessie annulaire gonflable est logée, sensiblement en totalité. L'une de ces parois est avantageusement la paroi de guidage précitée 8 (qu'elle se prolonge ou non jusqu'à la portée fixe) et l'autre paroi est désignée par la référence 9.

La vessie annulaire gonflable 6 comporte de préférence deux faces transversales et deux tranches radialement interne et externe, conformées en accordéon. De manière préférée, ces tranches peuvent avoir tout simplement la forme d'un signe d'inégalité < ou >.

Ainsi que cela ressort de la figure 3, les moyens d'admission/évacuation comportent avantageusement une pluralité de canaux 10 débouchant dans la vessie, en une pluralité d'endroits répartis angulairement, raccordés chacun à un distributeur commun 11 comportant :
- une voie de chargement 12, c'est-à-dire une voie servant à l'arrivée de l'énergie pneumatique,
- une voie 13 de contrôle de pression ou de déverrouillage manuel, c'est-à-dire une voie munie de moyens commandables d'obturation et des moyens de mesure de pression,
- une voie d'accès 14 munie d'une vanne 15 permettant une connexion avec une source de fluide, ou un échappement.

En variante simplifiée, il y a un seul canal (aucun distributeur n'est alors exigé) ; ce qui est apparu ne pas conduire à de réels risques de basculement.

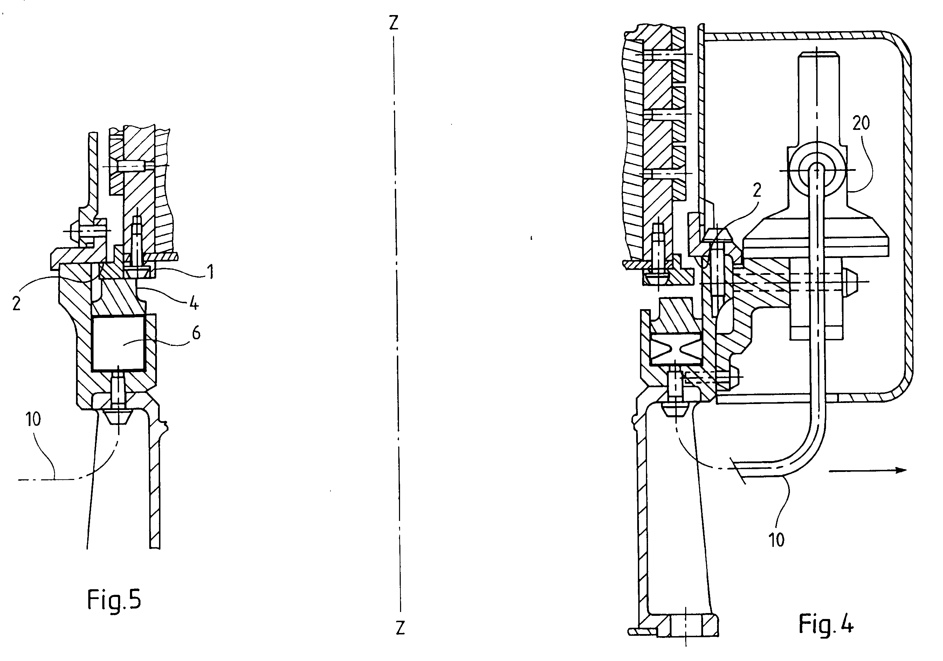

Les figures 4 et 5 représentent un exemple de réalisation d'un ensemble schématisé aux figures 1 et 2. Il s'agit ici d'une roue de réaction.

L'élément statorique 5 est ici fixé au carter 20 de l'ensemble ; les canalisations 10 débouchent au fond du logement recevant la vessie.

Le rotor B est muni près de son arête périphérique intérieure d'une pièce annulaire, vissée, formant la bride 1.

La référence 20 désigne une vanne pyrotechnique et aucun distributeur n'est représenté. Il est par exemple situé sous la vanne 20.

La zone de contact entre la portée statorique fixe et la bride est ici très étroite, à la périphérie externe de cette bride. Cette zone de contact est à peine en regard axialement de la portée annulaire mobile. Néanmoins, cela suffit pour un maintien efficace du rotor, sous réserve que le coefficient de frottement entre les surfaces en contact soit bien maîtrisé.

La course du poussoir est au moins égale à la somme des jeux axiaux existant, en une configuration déverrouillée, entre la bride et les portées annulaires fixe et mobile.

On appréciera que la vessie se déforme plus axialement que radialement, ce qui contribue à une bonne homogénéité de la déformation tout au long de la vessie. Elle a de préférence une raideur propre (mais il peut y avoir des moyens élastiques rapportés), la ramenant élastiquement vers sa configuration déverrouillée sans qu'il soit nécessaire de procéder à une quelconque aspiration ; la vessie est à cet effet avantageusement réalisée en métal (par exemple de l'acier inoxydable) ou en élastomère renforcé par des tissus. Il peut y avoir également des éléments élastiques entre les spires de l'accordéon précité (par exemple une bande d'élastomère collée dans les coins s'ouvrant vers l'extérieur). Ainsi le déverrouillage s'effectue par simple ouverture de la vanne 15 (pyrotechnique ou électrique).

A titre d'exemple, le dispositif des figures 4 et 5 a les propriétés suivantes :

| | |
|---|---|
| - course | 6,5 mm |
| - effort de verrouillage | ≥ 36 kN |
| - température de fonctionnement | entre -30°C et 70°C |
| - durée de vie | 13 ans |
| - effort repris en radial | jusqu'à 20 kN |
| - masse | 5 kg |

Il va de soi que la description qui précède n'a été proposée qu'à titre d'exemple non limitatif et que de nombreuses variantes peuvent être proposées par l'homme de l'art sans sortir du cadre de l'invention, défini par les revendications.

## Revendications

1. Dispositif pour le verrouillage et le déverrouillage d'un rotor vis à vis d'un stator, au moins parallèlement à l'axe de rotation de ce rotor, comportant :
- une bride annulaire rotorique (1) disposée transversalement à l'axe,
- une portée annulaire statorique (2) disposée transversalement à l'axe et disposée au moins en partie axialement en regard de la bride annulaire,
- une portée annulaire mobile (3), disposée transversalement à l'axe et disposée au moins en partie axialement en regard de la bride annulaire, à l'opposé de la portée annulaire statorique, cette portée annulaire mobile étant ménagée sur un anneau de poussée (4) attelé radialement à une portion statorique (5) et admettant un débattement axial vis-à-vis de celle-ci,
- une vessie annulaire gonflable (6), engagée dans cette portion statorique, axialement entre un fond (7) de la portion statorique et l'anneau de poussée, cette vessie étant munie de moyens d'admission/évacuation de fluide pneumatique.

2. Dispositif selon la revendication 1, caractérisé en ce que la bride annulaire rotorique comporte deux faces transversales parallèles.

3. Dispositif selon la revendication 1 ou la revendication 2, caractérisé en ce que la bride annulaire rotorique (1) est ménagée en saillie radiale à la périphérie radialement externe du rotor.

4. Dispositif selon l'une quelconque des revendications 1 à 3, caractérisé en ce que la portion statorique comporte une paroi cylindrique de guidage (8) maintenant radialement cet anneau tout en le guidant axialement lors de son débattement axial.

5. Dispositif selon la revendication 4, caractérisé en ce que la paroi cylindrique (8) s'étend jusqu'à la portée annulaire statorique (2) en contournant radialement la bride annulaire rotorique.

6. Dispositif selon la revendication 4 Ou la revendication 5, caractérisé en ce que cette paroi de guidage (8) entoure avec jeu l'anneau de poussée.

7. Dispositif selon l'une quelconque des revendications 1 à 3, caractérisé en ce que la portion statorique (5) comporte deux parois cylindriques (8, 9) radialement en regard définissant avec le fond statorique un logement annulaire dans lequel la vessie annulaire gonflable (6) est engagée sensiblement en totalité.

8. Dispositif selon la revendication 7, caractérisé en ce que l'une de ces parois cylindriques se prolonge axialement par une paroi cylindrique de guidage (8) de même diamètre maintenant radialement cet anneau tout en le guidant axialement lors de son débattement axial.

9. Dispositif selon la revendication 8, caractérisé en ce que cette paroi de guidage entoure avec jeu l'anneau de poussée.

10. Dispositif selon l'une quelconque des revendications 1 à 9, caractérisé en ce que les moyens d'admission/évacuation comportent au moins un canal (10) traversant le fond statorique.

11. Dispositif selon l'une quelconque des revendications 1 à 10, caractérisé en ce que les moyens d'admission/évacuation comportent une pluralité de canaux (10) débouchant dans la vessie et raccordées chacune à un distributeur (11).

12. Dispositif selon l'une quelconque des revendications 1 à 11, caractérisé en ce que la vessie comporte deux faces transversales et deux tranches radialement interne et externe conformées en accordéon.

13. Dispositif selon la revendication 12, caractérisé en ce que les tranches radialement interne et externe ont chacune la forme d'un signe d'inégalité > ou <.

14. Dispositif selon l'une quelconque des revendications 1 à 17, caractérisé en ce que les tranches radialement interne et externe ont une élasticité axiale les ramenant en une configuration rétractée.

## Claims

1. Device for locking and unlocking a rotor to a stator, at least parallel to the rotation axis of said rotor, including :
- an annular rotor flange (1) transverse to the axis,
- an annular stator bearing surface (2) transverse to the axis and at least partly axially facing the annular flange,
- a mobile annular bearing surface (3) transverse to the axis and at least partially axially facing the annular flange, on the side opposite to the stator annular bearing surface, said mobile annular bearing surface being formed on a thrust ring (4) coupled radially to a stator portion (5) and able to move axially relative thereto,
- an annular inflatable airbag (6) in said stator portion axially between a back (7) of said stator portion and the thrust ring, said airbag being provided with pneumatic fluid inlet/outlet means.

2. Device according to claim 1, characterized in that the rotor annular flange has two parallel transverse faces.

3. Device according to claim 1 or claim 2, characterized in that the rotor annular flange (1) projects radially from the radially outside periphery of the rotor.

4. Device according to any one of claims 1 to 3, characterized in that the stator portion includes a cylindrical guide wall (8) retaining said ring radially and guiding it axially when it moves axially.

5. Device according to claim 4, characterized in that the cylindrical wall (8) extends as far as the stator annular bearing surface (2), radially circumventing the rotor annular flange.

6. Device according to claim 4 or claim 5, characterized in that said guide wall (8) surrounds the thrust ring with clearance.

7. Device according to any one of claims 1 to 3, characterized in that the stator portion (5) includes two radially facing cylindrical walls (8, 9) defining with the stator back an annular housing in which substantially all of the annular inflatable airbag (6) is accomodated.

8. Device according to claim 7, characterized in that one of said cylindrical walls is extended axially by a cylindrical guide wall (8) of the same diameter retaining said ring radially and guiding it axially when it moves axially.

9. Device according to claim 8, characterized in that said guide wall surrounds the thrust ring with clearance.

10. Device according to any one of claims 1 to 9, characterized in that the inlet/outlet means include at least one passage (10) passing through the stator back.

11. Device according to any one of claims 1 to 10, characterized in that the inlet/outlet means include a plurality of passages (10) opening into the airbag and each connected to a distributor (11).

12. Device according to any one of claims 1 to 11, characterized in that the airbag has two transverse faces and accordion-shape inside and outside radial edges.

13. Device according to claim 12, characterized in that the inside and outside radial edges have each the shape of the mathematical symbol > or <.

14. Device according to any one of claims 1 to 13, characterized in that the inner and outer radial edges have an axial elasticity urging them towards a retracted configuration.

## Patentansprüche

1. Vorrichtung für die Verriegelung und die Entriegelung eines Rotors gegenüber einem Stator, zumindest parallel zur Rotationsachse dieses Rotors, aufweisend:
- einen transversal zur Achse angeordneten ringförmigen Rotorflansch (1),
- eine ringförmige Statoranlagefläche (2), die transversal zur Achse angeordnet ist und zumindest teilweise axial gegenüber dem ringförmigen Flansch angeordnet ist,
- eine bewegliche ringförmige Anlagefläche (3), die transversal zur Achse angeordnet ist und zumindest teilweise axial gegenüber dem ringförmigen Flansch auf der anderen Seite der ringförmigen Statoranlagefläche angeordnet ist, wobei diese ringförmige bewegliche Anlageflache auf einem Druckring (4) ausgespart ist, der radial an einem Statorabschnitt (5) eingespannt ist und gegenüber diesem einen axialen Ausschlag ermöglicht,
- einen ringförmigen füllbaren Balg (6), der in diesem Statorabschnitt axial zwischen einem Boden (7) des Statorabschnittes und dem Druckring eingefügt ist, wobei dieser Balg mit Mitteln zum Einlaß/Auslaß eines pneumatischen Fluids versehen ist.

2. Vorrichtung nach Anspruch 1, dadurch gekennzeichnet, daß der ringförmige Rotorflansch zwei transversale parallele Flächen aufweist.

3. Vorrichtung nach Anspruch 1 oder Anspruch 2, dadurch gekennzeichnet, daß der ringförmige Rotorflansch (1) radial auskragend am radial äußeren Umfang des Rotors ausgespart ist.

4. Vorrichtung nach einem der Ansprüche 1 bis 3, dadurch gekennzeichnet, daß der Statorabschnitt eine zylindrische Führungswand (8) aufweist, die diesen Ring radial hält, wobei sie ihn bei seinem axialen Ausschlag axial führt.

5. Vorrichtung nach Anspruch 4, dadurch gekennzeichnet, daß sich die zylindrische Wand (8) bis zur ringförmigen Statoranlagefläche (2) erstreckt, wobei sie den ringförmigen Rotorflansch radial umläuft.

6. Vorrichtung nach Anspruch 4 oder 5, dadurch gekennzeichnet, daß diese Führungswand (8) den Druckring mit Spiel umschließt.

7. Vorrichtung nach einem der Ansprüche 1 bis 3, dadurch gekennzeichnet, daß der Statorabschnitt (5) zwei einander radial gegenüberliegende zylindrische Wände (8, 9) aufweist, die mit dem Statorboden eine ringförmige Aufnahme begrenzen, in der der füllbare ringförmige Balg (6) im wesentlichen vollständig eingefügt ist.

8. Vorrichtung nach Anspruch 7, dadurch gekennzeichnet, daß eine der zylindrischen Wände sich axial durch eine zylindrische Führungswand (8) vom selben Durchmesser verlängert, die diesen Ring radial hält, wobei sie ihn bei seinem axialen Ausschlag axial führt.

9. Vorrichtung nach Anspruch 8, dadurch gekennzeichnet, daß diese Führungswand den Druckring mit Spiel umschließt.

10. Vorrichtung nach mindestens einem der Ansprüche 1 bis 9, dadurch gekennzeichnet, daß die Mittel zum Einlaß/Auslaß mindestens einen Kanal (10) umfassen, der den Statorboden durchquert.

11. Vorrichtung nach mindestens einem der Ansprüche 1 bis 10, dadurch gekennzeichnet, daß die Mittel zum Einlaß/Auslaß eine Vielzahl von Kanälen (10) aufweisen, die in den Balg münden und von denen jeder an einen Verteiler (11) angeschlossen ist.

12. Vorrichtung nach mindestens einem der Ansprüche 1 bis 11, dadurch gekennzeichnet, daß der Balg zwei transversale Flächen und zwei radial innere und äußere Scheiben aufweist, die akkordeonförmig angeordnet sind.

13. Vorrichtung nach Anspruch 12, dadurch gekennzeichnet, daß jede der radial inneren und äußeren Scheiben die Form eines "Ungleichzeichens" aufweist, und zwar ">" oder "<".

14. Vorrichtung nach mindestens einem der Ansprüche 1 bis 13, dadurch gekennzeichnet, daß die radial inneren und äußeren Scheiben eine axiale Elastizität aufweisen, welche sie in eine zusammengezogene Stellung zurückführt.
